# EUROPÄISCHE PATENTSCHRIFT

(11) **EP 4 298 720 B1**
(45) Veröffentlichungstag und Bekanntmachung des Hinweises auf die Patenterteilung: **01.07.2026**
(21) Anmeldenummer: 22702598.8
(22) Anmeldetag: 25.01.2022
(51) Int. Cl.: H02K 15/0421

(54) **VERFAHREN UND VORRICHTUNG ZUR HERSTELLUNG WENIGSTENS EINES BÜGELFÖRMIG GEBOGENEN DRAHTROHLINGS**
METHOD AND DEVICE FOR PRODUCING AT LEAST ONE WIRE BLANK BENT INTO THE SHAPE OF A BRACKET
PROCÉDÉ ET DISPOSITIF DE FABRICATION D'AU MOINS UNE ÉBAUCHE DE FIL PLIÉE EN FORME DE SUPPORT

(30) Priorität: 23.02.2021 DE 102021104217
(43) Veröffentlichungstag der Anmeldung: 03.01.2024
(73) Patentinhaber: Schaeffler Technologies AG & Co. KG, 91074 Herzogenaurach (DE)
(72) Erfinder: GEORG, Fabrice, 67350 Morschwiller (FR); FONTANA TORRES, Marcos, 77815 Bühl (DE)
(74) Vertreter: Schaeffler Technologies
(86) Internationale Anmeldenummer: PCT/DE2022/100060
(87) Internationale Veröffentlichungsnummer: WO 2022/179655

(56) Entgegenhaltungen:
- US-A- 5 115 657
- US-A1- 2019 109 523

## Beschreibung

Die Erfindung betrifft ein Verfahren und Vorrichtung zur Herstellung wenigstens eines bügelförmig gebogenen Drahtrohlings.

Bügelförmig gebogene Drahtrohlinge werden beispielsweise für die Herstellung von Rotor- oder Statorwicklungen von Elektromotoren benötigt. Die bügelförmig gebogenen Drahtrohlinge werden zu Wickelmatten mit Wickelköpfen und Drahtstegen gewickelt. Die so hergestellte Wickelmatte wird in einen Rotor oder Stator eines Elektromotors eingezogen. Hierbei liegen die Drahtstege in den Rotor- oder Statornuten ein und die Wickelköpfe bilden die Überleitung der einzelnen Wickeldrähte von einer Rotor- oder Statornut zur nächsten. Das Dokument US 2019/109523 A1 offenbart eine eine Vorrichtung zum Formen von Spulensegmenten und ein Verfahren zum Formen von Spulensegmenten.

Aus Gründen der Verarbeitung ist es wünschenswert die Drahtrohlinge am Stück zu verarbeiten. Demzufolge besteht der Bedarf die einzelnen Wickeldrähte durchgehend auszuführen und Schweißverbindungen von Teilstücken zu vermeiden. Insbesondere Elektromotoren mit hohen Leistungen weisen umfangreiche Spulenwicklungen auf, sodass lange Drahtstrecken für eine durchgehende Spulenwicklung bereitgestellt und verarbeitet werden müssen, um Leitungsverluste zu vermeiden und den benötigten Bauraum gering zu halten. Durch das Vorsehen eines bügelförmig gebogenen Drahtrohlings lässt sich die benötigte Drahtlänge bei Herstellung der Spulenwicklung halbieren, da der jeweilige Drahtrohling in seiner bügelförmigen Form mit beiden Drahtenden zu der Spulenwicklung verarbeitet werden kann. Gleichzeitig ist durch die bügelförmige Form ein Vorläufer eines ersten Wickelkopfs für die Herstellung einer Spulenwicklung gegeben. Dennoch ist zur Herstellung des bügelförmig gebogenen Drahtes ein nicht unerheblicher Bedarf an Platz erforderlich, da zunächst die gesamte Drahtlänge verarbeitet werden muss, um den bügelförmig gebogenen Draht durch einen oder mehrere Biegevorgänge zu erstellen.

Dementsprechend gestaltet sich die Aufgabe der vorliegenden Erfindung darin, ein Verfahren und eine Vorrichtung zur Herstellung eines bügelförmig gebogenen Drahtes bereitzustellen welche platzsparend betrieben werden können.

Diese Aufgabe wird durch die Erfindung nach den Ansprüchen 1 und 6 gelöst. Ausgestaltungen der Erfindung ergeben sich aus den Ansprüchen 2 bis 5 und 7 bis 10.

Für ein Verfahren zur Herstellung wenigstens eines bügelförmig gebogenen Drahtrohlings mit einem ersten Drahtabschnitt, einem zweiten Drahtabschnitt, der parallel zu dem ersten Drahtabschnitt ist und einem gebogenen Übergangsabschnitt zwischen dem ersten Drahtabschnitt und dem zweiten Drahtabschnitt, aufweisend die Verfahrensschritte:
- Bereitstellen eines Drahtes aus einem Drahtvorrat;
- Abziehen des Drahtes wenigstens in der Länge des Übergangsabschnittes und des zweiten Drahtabschnittes, wobei der Draht beim Abziehen begradigt wird;
- Versetzen des zweiten Drahtabschnitts parallel zu der Auszugsrichtung in einer Versatzebene, wodurch der Übergangsabschnitt zwischen zwei Biegestellen zwischen dem ersten Drahtabschnitt und dem zweiten Drahtabschnitt gebildet wird;
- Biegen des zweiten Drahtabschnitts um eine Biegeachse, wobei die Biegung in dem Übergangsabschnitt erfolgt und die Biegeachse in der Versatzebene und senkrecht zur Auszugsrichtung liegt;
ist erfindungsgemäß vorgesehen, dass der zweite Drahtabschnitt während des Abziehens um eine Achse parallel zur Biegeachse gerollt wird und während des Versetzens und Biegens gerollt bleibt.

Durch das erfindungsgemäße Verfahren ergibt sich der Vorteil, dass durch das Aufrollen des zweiten Drahtabschnitts ein geringerer Platzbedarf im Vergleich zu einem geradlinig ausgebreiteten Drahtabschnitt gegeben ist. Dies betrifft einerseits den Platzbedarf für den Draht vor Ausführung des Versetzschrittes und vor Ausführung des Biegeschrittes. Hier wird nämlich durch den gerollten Draht ein wesentlicher Teil des Platzbedarfs, den die ausgerollte und abgezogene Drahtlänge benötigen würde, eingespart. Zudem ist der gerollte zweite Drahtabschnitt in dem Biegeschritt im Gegensatz zu einem ausgerollten zweiten Drahtabschnitt einfacher zu handhaben. Gleiches gilt für die Handhabung und den Platzbedarf während der Ausführung des Biegeschrittes. Die Reihenfolge der Verfahrensschritte ist nicht durch die oben wiedergegebene Reihenfolge festgelegt. So kann es auch denkbar sein, dass der Versetzschritt nach dem Biegeschritt durchgeführt wird, um den bügelförmig gebogenen Drahtrohling herzustellen.

Nach einer weiteren Ausgestaltung des Verfahrens ist das Abziehen des Drahtes einschließlich des ersten Drahtabschnitts in der Auszugsrichtung aus dem Drahtvorrat vorgesehen. Wenn der erste Drahtabschnitt in der Auszugsrichtung aus dem Drahtvorrat ausgezogen wird, dann kann dieser während des Abziehens begradigt werden. In Auszugsrichtung liegt der erste Drahtabschnitt dann zwischen dem Drahtspeicher und dem Übergangsabschnitt begradigt vor. Für eine Herstellung des bügelförmig gebogenen Drahtrohlings nach dem Verfahren wird für den derart bereitgestellten ersten Drahtabschnitt in etwa die Hälfte der Länge des bügelförmig gebogenen Drahtrohlings benötigt, wobei noch die für den Übergangsabschnitt benötigte Länge berücksichtigt werden muss. Dies trägt ebenfalls in vorteilhafter Weise zur Lösung der Aufgabe bei, da der für das Verfahren benötigte Platz sich aus der Länge des ersten Drahtabschnitts, des Übergangsabschnitts und der räumlichen Ausdehnung des gerollten zweiten Drahtabschnitts ergibt.

Nach einer Weiterbildung des Verfahrens ist ein Kappen des Drahtes nach dem Abziehen der für den Drahtrohling benötigten Drahtlänge vorgesehen. Hierfür kann eine Kappvorrichtung zwischen dem Drahtvorrat und dem ersten Drahtabschnitt vorgesehen sein. Auf diese Weise kann der Drahtvorrat einen Draht für einen späteren Versetz- und Biegevorgang zur Herstellung eines gebogenen Drahtrohlings vorhalten. Ebenfalls ist denkbar, dass von dem Drahtvorrat in der Zwischenzeit, in dem der Versetz- und Biegeschritt stattfindet, der oder die Drahtabschnitt(e) für wenigstens einen weiteren Draht abgezogen wird / werden.

Das Verfahren kann dadurch weitergebildet werden, dass nach dem Versetzen und Biegen der Draht des zweiten Drahtabschnittes abgerollt und begradigt wird, so dass der zweite Drahtabschnitt über seine Länge parallel zum ersten Drahtabschnitt verläuft. Dies trägt in vorteilhafter Weise dazu bei, dass ein begradigter bügelförmig gebogener Drahtrohling vorliegt, dessen Platzbedarf bei der Lagerung und der weiteren Handhabung - etwa zur Herstellung einer Spulenwicklung - nicht über den Platzbedarf während seiner Herstellung hinausgeht. Zudem ergibt sich der weitere Vorteil, dass der bügelförmig gebogene Drahtabschnitt mit dem zweiten Drahtabschnitt, der über seine Länge parallel zum ersten Drahtabschnitt verläuft, als geradliniges Langmaterial vergleichsweise einfach zu handhaben und zu lagern ist. Nach einer weiteren Ausgestaltung kann vorgesehen sein, dass der zweite Drahtabschnitt nach dem Abrollen senkrecht zu der Achse, in der der zweite Drahtabschnitt aufgerollt war, nachgerichtet wird. Dies begünstigt den Abbau von etwaigen Spannungen in dem Draht, die nach dem Abrollen vorhanden sein können.

Zur Steigerung der Verfahrenseffizienz kann vorgesehen sein, dass das Verfahren für zwei oder mehr parallel zueinander geführte Drähte durchgeführt wird. Insbesondere kann vorgesehen sein, dass das Verfahren für sechs parallele Drähte oder einer Vielzahl von drei parallelen Drähten durchgeführt wird.

Nach einem weiteren Aspekt der Erfindung ist eine Vorrichtung zur Herstellung wenigstens eines bügelförmig gebogenen Drahtrohlings vorgesehen, aufweisend
- einen Drahtvorrat zur Zuführung wenigstens eines Drahtes in einer Auszugsrichtung,
- eine in Auszugsrichtung nach dem Drahtvorrat angeordnete erste Richtvorrichtung zur Begradigung des zugeführten Drahtes,
- einen ersten Drahtspeicher, in dem ein erster Drahtabschnitt aufgenommen ist,
- eine Versetz- und Biegevorrichtung, in der ein Übergangsabschnitt des Drahtes liegt,
- ein zweiter Drahtspeicher, in dem ein zweiter Drahtabschnitt aufgenommen ist, wobei
der zweite Drahtspeicher ein Ringspeicher ist, worin der zweite Drahtabschnitt aufwickelbar ist.

Durch das Vorsehen des Ringspeichers ergibt sich eine Reduzierung des Platzbedarfs nach der Versetz- und Biegevorrichtung. Der zweite Drahtspeicher ist in dem Ringspeicher aufgewickelt. Der Ringspeicher kann derart ausgebildet sein, dass der zweite Drahtabschnitt in einer Wickellage in dem Ringspeicher einliegt, oder auch spiralförmig in mehreren Lagen in dem Ringspeicher gewickelt einliegt. Ebenfalls ist denkbar, dass der zweite Drahtabschnitt in dem Ringspeicher schraubenförmig einliegt und dadurch in dem Ringspeicher eine Ausdehnung senkrecht zu der Auszugsrichtung des Drahtes aufweist. In einer weiteren konstruktiv günstigen Ausgestaltung der Erfindung kann vorgesehen sein, dass der Draht von einer die Drahtzuführung darstellenden Haspel zugeführt wird.

Nach einer weiteren Ausgestaltung der Vorrichtung ist vorgesehen, dass die Versetz- und Biegevorrichtung eine erste Klemme zur Fixierung des ersten Drahtabschnitts aufweist und eine zweite Klemme zur Fixierung des zweiten Drahtabschnitts auf einem Schenkel aufweist, wobei der Schenkel um eine senkrecht zur Auszugsrichtung und zwischen den Klemmen liegende Schwenkachse schwenkbar und parallel zu der Schwenkachse versetzbar ist und, wobei der zweite Drahtspeicher gemeinsam mit dem Schenkel um die Schwenkachse schwenkbar ist. Auf diese Weise wird vorteilhaft erreicht, dass die Biegung des Drahtes in dem Übergangsabschnitt hergestellt wird, ohne, dass der Draht nochmals oder an einer weiteren Stelle fixiert werden muss. Ebenfalls ist durch die gemeinsame Verschwenkbarkeit des Schenkels und der Versetz- und Biegevorrichtung eine Reduzierung des für die Vorrichtung benötigten Bauraumes gegeben. Weiterbildend kann vorgesehen sein, dass der erste Schenkel während des Versetzschrittes in Richtung des zweiten Schenkels bewegbar ist bzw. bewegt wird, um ein Längen des Drahtes in dem Übergangsabschnitt zu vermeiden.

Gemäß einer Weiterbildung der Vorrichtung ist vorgesehen, dass die Versetz- und Biegevorrichtung ein senkrecht zur Auszugsrichtung bewegbares Biegeschwert aufweist, um das der Schenkel der Versetz- und Biegevorrichtung schwenkbar ist. Durch das Biegeschwert wird der Draht in vorteilhafter Weise an einer Biegekante umgebogen, wodurch sich eine definierte Biegung herstellen und eine definierte Länge der jeweiligen Schenkel des gebogenen Drahtrohlings einhalten lassen. Auf diese Weise kann sichergestellt werden, dass die Biegung wiederholgenau und auf die Länge des Drahtes gesehen exakt an der richtigen Stelle durchgeführt wird. Ferner kann sichergestellt werden, dass die Schenkel des gebogenen Drahtrohlings die gleiche Länge aufweisen, womit Verschnitt des Drahtes vermieden wird.

Nach einer weiteren Ausgestaltung der Vorrichtung ergibt sich, dass der zweite Drahtspeicher entgegen der Auszugsrichtung zur Entnahme des darin gespeicherten zweiten Drahtabschnittes linear beweglich ist, wobei eine zweite Richtvorrichtung für den zweiten Drahtspeicher zur Begradigung des aus dem zweiten Drahtspeicher entnommenen zweiten Drahtabschnittes vorgesehen ist. Auf diese Weise kann der zweite Drahtabschnitt aus dem zweiten Drahtspeicher, in dem der zweite Drahtabschnitt gebogen gespeichert ist, entnommen und gleichzeitig begradigt werden, sodass der zweite Drahtabschnitt des Drahtes des bügelförmig gebogenen Drahtrohlings parallel zu dem ersten Drahtabschnitt des Drahtes des bügelförmig gebogenen Drahtrohlings vorliegt. Das Abziehen bzw. lineare Verfahren des zweiten Drahtspeichers erfolgt im Wesentlichen über die Länge des ersten Drahtabschnitts, sodass auf die Länge der Vorrichtung bezogen kein zusätzlicher Platzbedarf besteht. Dementsprechend folgt aus einer Weiterbildung der Erfindung, dass der zweite Drahtspeicher auf einen parallel zur Auszugsrichtung linear verfahrbaren Schlitten überführbar ist und die zweite Richtvorrichtung auf dem linear verfahrbaren Schlitten angeordnet ist.

Weitere Merkmale, Details und Vorteile der Erfindung ergeben sich aus dem Wortlaut der Ansprüche sowie aus der folgenden Beschreibung Ausführungsbeispielen basierend auf den Zeichnungen.

In den Figuren zeigen:
- Fig. 1 A, B:: Eine schematische Darstellung der Konfiguration mehrerer parallel zueinander verlaufender Drähte in der Vorrichtung nach dem Abziehen aus dem Drahtvorrat in einer Seitenansicht und einer Draufsicht;
- Fig. 2:: Eine schematische Darstellung der Versetz- und Biegevorrichtung nach dem Versetzschritt in einer Draufsicht;
- Fig. 3 A, B:: Eine schematische Darstellung der Versetz- und Biegevorrichtung nach dem Biegeschritt in einer Seitenansicht und einer Draufsicht; und
- Fig. 4 A, B:: Eine schematische Darstellung der Vorrichtung nach der Herstellung von mehreren parallel zueinander verlaufender bügelförmigen Drahtrohlinge in einer Seitenansicht und einer Draufsicht.

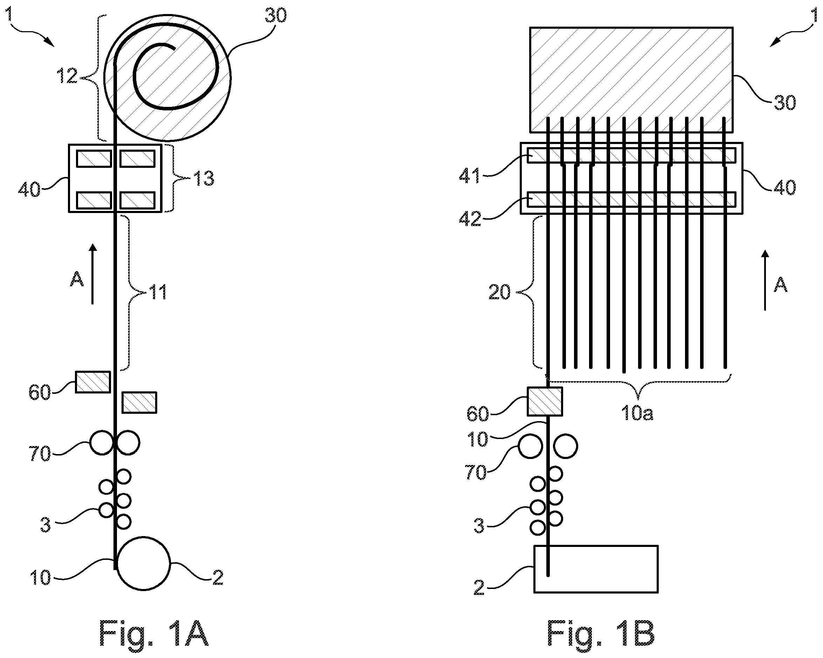

Figur 1 A zeigt eine schematische Darstellung der Konfiguration mehrerer parallel zueinander verlaufenden Drähte 10a in der Vorrichtung 1 nach dem Abziehen aus dem Drahtvorrat 2 in einer Seitenansicht. Man erkennt, dass der Draht 10 von einem Drahtvorrat 2 abgezogen wird und durch erste Richtvorrichtung 3 gerichtet wird. Der Drahtvorrat 2 kann beispielsweise durch eine Haspel dargestellt sein. Die erste Richtvorrichtung 3 richtet den Draht 10, sodass er geradlinig in einer Auszugsrichtung A verläuft. Der Auszug des Drahtes 10 kann mittels einer Vorschubeinheit 70 erfolgen, die in Auszugsrichtung A nach der ersten Richtvorrichtung 3 angeordnet sein kann. Der begradigte Draht 10 wird mittels der Vorschubeinheit 70 durch einen ersten Drahtspeicher 20 und eine Versetz- und Biegevorrichtung 40 in einen zweiten Drahtspeicher 30 befördert, wo der zweite Drahtabschnitt 12 gewickelt vorliegt. Wenn der zweite Drahtspeicher 30 gefüllt ist, dann wird der Drahtvorschub bzw. der Auszug des Drahtes 10 aus dem Drahtvorrat 2 unterbrochen. In der Versetz- und Biegevorrichtung 40 liegt dann der Übergangsabschnitt 13 und zwischen dem Drahtvorrat 2 und der Versetz- und Biegevorrichtung 40 liegt der erste Drahtabschnitt 11 in einem ersten Drahtspeicher 20, der in dieser Ausführungsform als Linearspeicher vorgesehen ist.

Figur 1 B zeigt die schematische Darstellung der Konfiguration mehrerer parallel zueinander verlaufenden Drähte 10a in der Vorrichtung 1 nach dem Abziehen aus dem Drahtvorrat 2 in einer Draufsicht. Die mehreren parallelen Drähte 10a werden nacheinander in den ersten Drahtspeicher 20, die Versetz- und Biegevorrichtung 40 und den zweiten Drahtspeicher 30 befördert. Nach dem Abziehen des jeweiligen Drahtes 10 in der der für den Drahtrohling 100 benötigten Drahtlänge wird der jeweilige Draht 10 mittels der Schere 60 zwischen dem Drahtvorrat 2 und dem ersten Drahtspeicher 20 gekappt und ein weiterer Draht 10 in die Vorrichtung 1 eingezogen, bis eine Anzahl an parallelen Drähten 10a, in dieser Ausführungsform 4x3 Drähte, in der Vorrichtung 1 einliegen.

In dem ersten Drahtspeicher 20 und in dem zweiten Drahtspeicher 30 liegen die Drähte 10 mit dem jeweiligen Drahtabschnitt 11, 12 in etwa in derselben Länge ein.

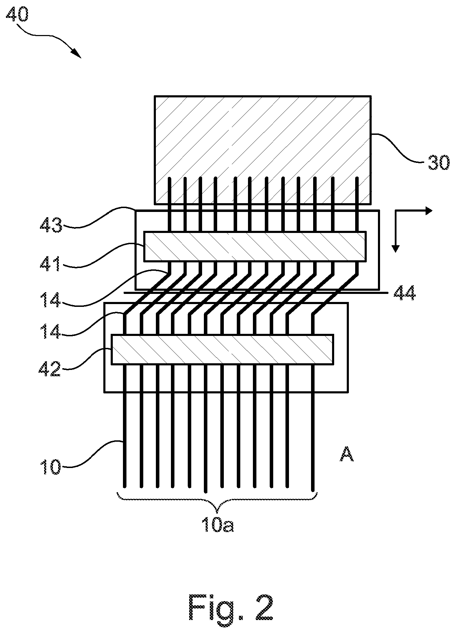

Figur 2 zeigt eine schematische Darstellung der Versetz- und Biegevorrichtung 40 nach dem Versetzschritt in einer Draufsicht. Man erkennt, dass die Versetz- und Biegevorrichtung 40 eine erste Klemme 41 zur Klemmung des ersten Drahtabschnitts 11 und eine zweite Klemme 42 zur Klemmung des zweiten Drahtabschnitts 12 aufweist. Der erste Drahtabschnitt 11 und der zweite Drahtabschnitt 12 werden gegeneinander senkrecht zu der Auszugsrichtung A versetzt. Der zweite Drahtabschnitt 12 liegt hierbei gewickelt in dem zweiten Drahtspeicher 30 ein, welcher gemeinsam mit einer Klemme 41 der Versetz- und Biegevorrichtung 40 senkrecht zu der Auszugsrichtung A bewegt wird. Auf diese Weise werden in dem Übergangsabschnitt 13 vor, bzw. nach der Klemme 41, 42 Biegestellen 14 ausgebildet. In den jeweiligen Drähten 10a ist durch den Versetzschritt ein schräger Versatz ausgebildet. In dieser Ausführungsform erfolgt das Versetzen senkrecht zu der Auszugsrichtung A um einen Versatzbetrag, der dem 1,5-fachen Abstand der parallel eingezogenen Drähte beträgt. Die Klemme 41 der Versetz- und Biegevorrichtung 40, welche senkrecht zu der Auszugsrichtung A bewegt wird, kann gleichzeitig auch entgegen der Auszugsrichtung A bewegt werden, um eine Längung der Drähte 10a durch den Versetzschritt zu vermeiden.

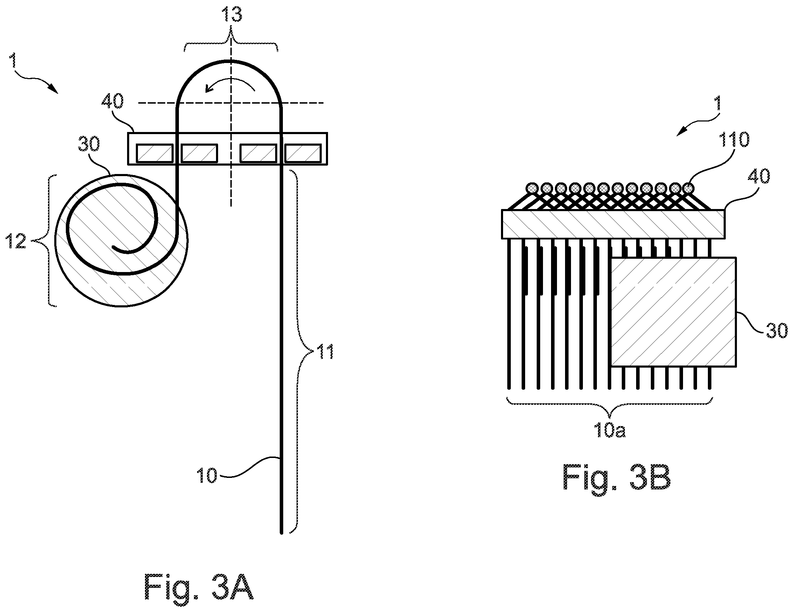

Figur 3 A zeigt eine schematische Darstellung der Versetz- und Biegevorrichtung 40 nach dem Biegeschritt in einer Seitenansicht. Man erkennt, dass ein Schenkel 43 der Versetz- und Biegevorrichtung 40 um 180° entgegen der Auszugsrichtung A geklappt worden ist, während die Klemmen 41, 42 jeweils den ersten Drahtabschnitt 11 und den zweiten Drahtabschnitt 12 fixieren. Der zweite Drahtspeicher 30 wird hierbei gleichzeitig mit dem Schenkel 43 der Versetz- und Biegevorrichtung 40 geschwenkt. Das Klappen des Schenkels 43 der Versetz- und Biegevorrichtung 40 bzw. das Schwenken des zweiten Drahtspeichers 30 erfolgt um eine Schwenkachse 44.

Figur 3 B zeigt die schematische Darstellung der Versetz- und Biegevorrichtung 40 nach dem Biegeschritt in einer Draufsicht, wobei die Klemmen 41, 42 übereinander liegen. Man erkennt, dass die bügelförmig gebogenen Drahtrohlinge 100 dachförmige Wickelköpfe 110 ausbilden.

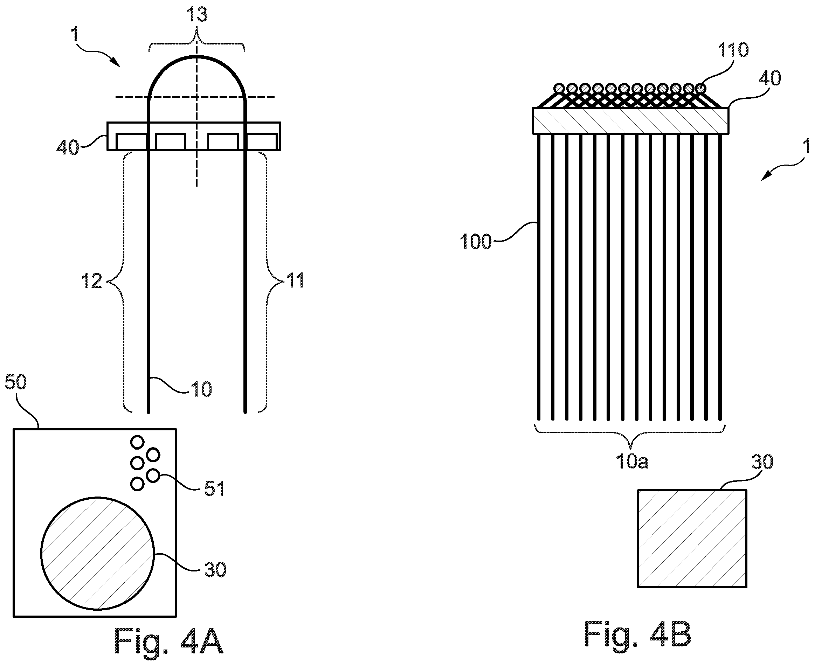

Figur 4 A zeigt eine schematische Darstellung der Vorrichtung 1 nach der Herstellung von mehreren parallel zueinander verlaufenden bügelförmigen Drahtrohlinge 100 in einer Seitenansicht. Der zweite Drahtspeicher 30 wurde auf einen linear verfahrbaren Schlitten 50 überführt, auf dem auch eine zweite Richtvorrichtung 51 angeordnet ist. Durch das Verfahren des zweiten Drahtspeichers 30 mittels des linear verfahrbaren Schlittens 50 entgegen der Auszugsrichtung wird der in dem zweiten Drahtspeicher 30 aufgewickelte zweite Drahtabschnitt 12 aus dem zweiten Drahtspeicher 30 ausgezogen und durch die zweite Richtvorrichtung 51 gerichtet. Der erste Drahtabschnitt 11 und der zweite Drahtabschnitt 12 liegen so parallel zueinander vor. In einem weiteren Verfahrensschritt werden die Klemmen 41, 42 der Versetz- und Biegevorrichtung 40 gelöst, sodass der oder die bügelförmig gebogene(n) Drahtrohling(e) 100 aus der Vorrichtung 1 entnommen werden kann bzw. können. Figur 4 B zeigt die schematische Darstellung der Vorrichtung 1 nach der Herstellung von mehreren parallel zueinander verlaufenden bügelförmigen Drahtrohlinge 100 in einer Draufsicht vor dem Lösen der Klemmen 41, 42.

Sämtliche Merkmale und Vorteile, die sich aus den Ansprüchen, der Beschreibung und der Zeichnung ergeben, einschließlich konstruktiver Einzelheiten, räumlicher Anordnungen und Verfahrensschritten, können sowohl allein als auch in verschiedenen Kombinationen für die Erfindung wesentlich sein. So kann vorgesehen sein, dass der Biegeschritt vor dem Versatzschritt ausgeführt wird. Ferner kann vorgesehen sein, dass der erste Drahtabschnitt während der Durchführung des Versatz- und Biegeschritts ebenfalls in einem platzsparenden Ringspeicher einliegt und nach dem Versatz- und Biegeschritt analog zu dem zweiten Drahtabschnitt aus dem Speicher entnommen und begradigt wird.

### Bezugszeichenliste

- 1: Vorrichtung

- 2: Drahtvorrat
- 3: Erste Richtvorrichtung

- 10: Draht
- 10a: Parallele Drähte
- 11: Erster Drahtabschnitt
- 12: Zweiter Drahtabschnitt
- 13: Übergangsabschnitt
- 14: Biegestelle

- 20: Erster Drahtspeicher
- 30: Zweiter Drahtspeicher

- 40: Versetz- und Biegevorrichtung
- 41: Erste Klemme
- 42: Zweite Klemme
- 43: Schenkel
- 44: Schwenkachse, Biegeachse

- 50: Schlitten
- 51: Zweite Richtvorrichtung

- 60: Schere
- 70: Vorschubeinheit

- A: Auszugsrichtung

- 100: Drahtrohling
- 110: Wickelkopf

## Patentansprüche

1. Verfahren zur Herstellung wenigstens eines bügelförmig gebogenen Drahtrohlings (100) mit einem ersten Drahtabschnitt (11), einem zweiten Drahtabschnitt (12), der parallel zu dem ersten Drahtabschnitt ist und einem gebogenen Übergangsabschnitt (13) zwischen dem ersten Drahtabschnitt (11) und dem zweiten Drahtabschnitt (12), aufweisend die Verfahrensschritte:
- Bereitstellen eines Drahtes (10) aus einem Drahtvorrat (2);
- Abziehen des Drahtes wenigstens in der Länge des Übergangsabschnittes (13) und des zweiten Drahtabschnittes (12), wobei der Draht (10) beim Abziehen begradigt wird;
- Versetzen des zweiten Drahtabschnitts (12) parallel zu der Auszugsrichtung (A) in einer Versatzebene, wodurch der Übergangsabschnitt (13) zwischen zwei Biegestellen (14) zwischen dem ersten Drahtabschnitt (11) und zweiten Drahtabschnitt (12) gebildet wird;
- Biegen des zweiten Drahtabschnitts (12) um eine Biegeachse (44), wobei die Biegung in dem Übergangsabschnitt (13) erfolgt und die Biegeachse (44) in der Versatzebene und senkrecht zur Auszugsrichtung (A) liegt;
**dadurch gekennzeichnet, dass**
der zweite Drahtabschnitt (12) während des Abziehens um eine Achse parallel zur Biegeachse (44) gerollt wird und während des Versetzens und Biegens gerollt bleibt.

2. Verfahren nach Anspruch 1 aufweisend den Verfahrensschritt:
- Abziehen des Drahtes (10) einschließlich des ersten Drahtabschnitts (11) in der Auszugsrichtung (A) aus dem Drahtvorrat (2).

3. Verfahren nach Anspruch 2, aufweisend den Verfahrensschritt:
- Kappen des Drahtes (10) nach dem Abziehen der für den Drahtrohling (100) benötigten Drahtlänge.

4. Verfahren nach einem der vorhergehenden Ansprüche, wobei nach dem Versetzen und Biegen der Draht (10) des zweiten Drahtabschnittes (12) abgerollt und begradigt wird, so dass der zweite Drahtabschnitt (12) über seine Länge parallel zum ersten Drahtabschnitt (11) verläuft.

5. Verfahren nach einem der vorhergehenden Ansprüche, wobei das Verfahren für zwei oder mehr parallel zueinander geführte Drähte (10a) durchgeführt wird.

6. Vorrichtung (1) zur Herstellung wenigstens eines bügelförmig gebogenen Drahtrohlings (100) mit einem ersten Drahtabschnitt (11), einem zweiten Drahtabschnitt (12), der parallel zu dem ersten Drahtabschnitt ist und einem gebogenen Übergangsabschnitt (13) zwischen dem ersten Drahtabschnitt (11) und dem zweiten Drahtabschnitt (12), aufweisend
- einen Drahtvorrat (2) zur Zuführung wenigstens eines Drahtes (10) in einer Auszugsrichtung (A),
- eine in Auszugsrichtung (A) nach dem Drahtvorrat (2) angeordnete erste Richtvorrichtung (3) zur Begradigung des zugeführten Drahtes (10),
- einen ersten Drahtspeicher (20), in dem ein erster Drahtabschnitt (11) aufgenommen ist,
- eine Versetz- und Biegevorrichtung (40), in der ein Übergangsabschnitt (13) des Drahtes (10) liegt,
- ein zweiter Drahtspeicher (30), in dem ein zweiter Drahtabschnitt (12) aufgenommen ist, **dadurch gekennzeichnet, dass** der zweite Drahtspeicher (30) ein Ringspeicher ist, worin der zweite Drahtabschnitt (12) aufwickelbar ist.

7. Vorrichtung (1) nach Anspruch 6, **dadurch gekennzeichnet, dass** die Versetz- und Biegevorrichtung (40) eine erste Klemme (41) zur Fixierung des ersten Drahtabschnitts (11) aufweist und eine zweite Klemme (42) zur Fixierung des zweiten Drahtabschnitts (12) aufweist, wobei die zweite Klemme (42) auf einem Schenkel (43) angeordnet ist und der Schenkel (43) um eine senkrecht zur Auszugsrichtung (A) und zwischen den Klemmen (41, 42) liegende Schwenkachse (44) schwenkbar und parallel zu der Schwenkachse (44) versetzbar ist und, wobei der zweite Drahtspeicher (30) gemeinsam mit dem Schenkel (43) um die Schwenkachse (44) schwenkbar ist.

8. Vorrichtung (1) nach Anspruch 7, **dadurch gekennzeichnet, dass** die Versetz- und Biegevorrichtung (40) ein senkrecht zur Auszugsrichtung (A) bewegbares Biegeschwert aufweist, um das der Schenkel (43) der Versetz- und Biegevorrichtung (40) schwenkbar ist.

9. Vorrichtung (1) nach einem der Ansprüche 6 bis 8, **dadurch gekennzeichnet, dass** der zweite Drahtspeicher (30) entgegen der Auszugsrichtung (A) zur Entnahme des darin gespeicherten zweiten Drahtabschnittes (12) linear beweglich ist, wobei eine zweite Richtvorrichtung (51) für den zweiten Drahtspeicher (30) zur Begradigung des aus dem zweiten Drahtspeicher (30) entnommenen zweiten Drahtabschnittes (12) vorgesehen ist.

10. Vorrichtung nach Anspruch 9, **dadurch gekennzeichnet, dass** der zweite Drahtspeicher (30) auf einen parallel zur Auszugsrichtung (A) linear verfahrbaren Schlitten (50) überführbar ist und die zweite Richtvorrichtung (51) auf dem linear verfahrbaren Schlitten (50) angeordnet ist.

## Claims

1. A method for producing at least one wire blank (100) bent into the shape of a bracket having a first wire portion (11), a second wire portion (12) which is parallel to the first wire portion and a bent transition portion (13) between the first wire portion (11) and the second wire portion (12), comprising the method steps:
- providing a wire (10) from a wire supply (2);
- drawing the wire at least over the length of the transition portion (13) and of the second wire portion (12), wherein the wire (10) is straightened during the drawing;
- displacing the second wire portion (12) parallel to the drawing direction (A) in a displacement plane, thereby forming the transition portion (13) between two bending points (14) between the first wire portion (11) and the second wire portion (12);
- bending the second wire portion (12) about a bending axis (44), wherein the bending takes place in the transition portion (13) and the bending axis (44) being in the displacement plane and perpendicular to the drawing direction (A);
**characterised in that**
the second wire portion (12) is rolled around an axis parallel to the bending axis (44) during the drawing and remains rolled during the displacing and bending.

2. The method according to claim 1 comprising the method step:
- drawing the wire (10) including the first wire portion (11) in the drawing direction (A) from the wire supply (2).

3. The method according to claim 2, comprising the method step:
- cutting the wire (10) after drawing the length of wire required for the wire blank (100).

4. The method according to any one of the preceding claims, wherein unrolling and straightening take place after the wire (10) of the second wire portion (12) is displaced and bent so that the second wire portion (12) runs parallel to the first wire portion (11) over its length.

5. The method according to any one of the preceding claims, wherein the method is carried out for two or more wires (10a) guided parallel to each other.

6. A device (1) for producing at least one wire blank (100) bent into the shape of a bracket having a first wire portion (11), a second wire portion (12) which is parallel to the first wire portion and a bent transition portion (13) between the first wire portion (11) and the second wire portion (12), comprising
- a wire supply (2) for feeding at least one wire (10) in a drawing direction (A),
- a first straightening device (3), arranged downstream of the wire supply (2) in the drawing direction (A), for straightening the fed wire (10),
- a first wire storage unit (20) in which a first wire portion (11) is received,
- a displacing and bending device (40) in which a transition portion (13) of the wire (10) is located,
- a second wire storage unit (30) in which a second wire portion (12) is received, **characterised in that** the second wire storage unit (30) is a ring storage unit in which the second wire portion (12) can be wound up.

7. The device (1) according to claim 6, **characterised in that** the displacing and bending device (40) has a first clamp (41) for fixing the first wire portion (11) and a second clamp (42) for fixing the second wire portion (12), wherein the second clamp (42) is arranged on a leg (43) and the leg (43) is pivotable about a pivot axis (44) disposed perpendicular to the drawing direction (A) and between the clamps (41, 42) and is displaceable parallel to the pivot axis (44) and wherein the second wire storage unit (30) is pivotable together with the leg (43) about the pivot axis (44).

8. The device (1) according to claim 7, **characterised in that** the displacing and bending device (40) has a bending blade which is movable perpendicular to the drawing direction (A) and about which the leg (43) of the displacing and bending device (40) is pivotable.

9. The device (1) according to any one of claims 6 to 8, **characterised in that** the second wire storage unit (30) is linearly movable counter to the drawing direction (A) for removing the second wire portion (12) stored therein, wherein a second straightening device (51) is provided for the second wire storage unit (30) for straightening the second wire portion (12) removed from the second wire storage unit (30).

10. The device according to claim 9, **characterised in that** the second wire storage unit (30) can be transferred to a slide (50) that is linearly movable parallel to the drawing direction (A) and the second straightening device (51) is arranged on the linearly movable slide (50).

## Revendications

1. Procédé de fabrication d'au moins une ébauche de fil (100) pliée en forme de support comportant une première section de fil (11), une seconde section de fil (12) qui est parallèle à la première section de fil et une section de transition (13) pliée entre la première section de fil (11) et la seconde section de fil (12), présentant les étapes de procédé consistant à :
- fournir un fil (10) à partir d'une réserve de fil (2) ;
- étirer le fil au moins sur la longueur de la section de transition (13) et de la seconde section de fil (12), le fil (10) étant redressé pendant le processus d'étirage ;
- décaler la seconde section de fil (12) parallèlement à la direction d'extraction (A) dans un plan de décalage, formant ainsi la section de transition (13) entre deux points de pliage (14) entre la première section de fil (11) et la seconde section de fil (12) ;
- plier la seconde section de fil (12) autour d'un axe de pliage (44), le pliage se produisant dans la section de transition (13) et l'axe de pliage (44) se trouvant dans le plan de décalage et perpendiculaire à la direction d'extraction (A) ;
**caractérisé en ce que**
la seconde section de fil (12) est enroulée autour d'un axe parallèle à l'axe de pliage (44) pendant l'étirage et reste enroulée pendant le décalage et le pliage.

2. Procédé selon la revendication 1 présentant l'étape de procédé consistant à :
- étirer le fil (10) y compris la première section de fil (11) dans la direction d'extraction (A) à partir de la réserve de fil (2).

3. Procédé selon la revendication 2, présentant l'étape de procédé consistant à :
- couper le fil (10) après avoir étiré la longueur de fil nécessaire pour l'ébauche de fil (100).

4. Procédé selon l'une quelconque des revendications précédentes, dans lequel, après le décalage et le pliage, le fil (10) de la seconde section de fil (12) est déroulé et redressé de sorte que la seconde section de fil (12) court parallèlement à la première section de fil (11) sur toute sa longueur.

5. Procédé selon l'une quelconque des revendications précédentes, le procédé étant réalisé pour au moins deux fils (10a) guidés parallèlement l'un à l'autre.

6. Dispositif (1) de fabrication d'au moins une ébauche de fil (100) pliée en forme de support comportant une première section de fil (11), une seconde section de fil (12) qui est parallèle à la première section de fil et une section de transition (13) pliée entre la première section de fil (11) et la seconde section de fil (12), présentant
- une réserve de fil (2) pour alimenter au moins un fil (10) dans une direction d'extraction (A),
- un premier dispositif de redressement (3) agencé dans la direction d'extraction (A) après la réserve de fil (2) pour redresser le fil (10) alimenté,
- une première unité de stockage de fil (20) dans laquelle est reçue une première section de fil (11),
- un dispositif de décalage et de pliage (40) dans lequel se trouve une section de transition (13) du fil (10),
- une seconde unité de stockage de fil (30) dans laquelle est reçue une seconde section de fil (12), **caractérisé en ce que** la seconde unité de stockage de fil (30) est une unité de stockage annulaire dans laquelle la seconde section de fil (12) peut être enroulée.

7. Dispositif (1) selon la revendication 6, **caractérisé en ce que** le dispositif de décalage et de pliage (40) présente une première pince (41) pour fixer la première section de fil (11) et une seconde pince (42) pour fixer la seconde section de fil (12), la seconde pince (42) étant agencée sur une branche (43) et la branche (43) pouvant pivoter autour d'un axe de pivotement (44) perpendiculaire à la direction d'extraction (A) et se trouvant entre les pinces (41, 42) et pouvant être décalée parallèlement à l'axe de pivotement (44), la seconde unité de stockage de fil (30) pouvant pivoter conjointement avec la branche (43) autour de l'axe de pivotement (44).

8. Dispositif (1) selon la revendication 7, **caractérisé en ce que** le dispositif de décalage et de pliage (40) présente une lame de pliage mobile perpendiculairement à la direction d'extraction (A) autour de laquelle peut pivoter la branche (43) du dispositif de décalage et de pliage (40).

9. Dispositif (1) selon l'une des revendications 6 à 8, **caractérisé en ce que** la seconde unité de stockage de fil (30) est mobile linéairement contre la direction d'extraction (A) pour le retrait de la seconde section de fil (12) qui y est stockée, un second dispositif de redressement (51) étant prévu pour la seconde unité de stockage de fil (30) afin de redresser la seconde section de fil (12) retirée de la seconde unité de stockage de fil (30).

10. Dispositif selon la revendication 9, **caractérisé en ce que** la seconde unité de stockage de fil (30) peut être transférée sur un coulisseau (50) mobile linéairement parallèlement à la direction d'extraction (A) et le second dispositif de redressement (51) est agencé sur le coulisseau (50) mobile linéairement.
